(19) Europäisches Patentamt / European Patent Office / Office européen des brevets

(11) **EP 4 589 679 A1**

(12) **EUROPEAN PATENT APPLICATION**

(43) Date of publication:
**23.07.2025 Bulletin 2025/30**

(21) Application number: **24223326.0**

(22) Date of filing: **26.12.2024**

(51) International Patent Classification (IPC):
*H01M 4/131* (2010.01)    *H01M 4/136* (2010.01)
*H01M 4/36* (2006.01)    *H01M 4/505* (2010.01)
*H01M 4/525* (2010.01)    *H01M 4/58* (2010.01)

(52) Cooperative Patent Classification (CPC):
**H01M 4/136; H01M 4/131; H01M 4/364;
H01M 4/505; H01M 4/525; H01M 4/5825;
Y02E 60/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.12.2023 CN 202311825624**

(71) Applicant: **Xiamen Ampack Technology Limited
Xiamen City, Fujian Province, 361000 (CN)**

(72) Inventor: **LIU, Ning
Xiamen City, Fujian Province, People s Republic
of
China, 361000 (CN)**

(74) Representative: **Icosa
83 avenue Denfert-Rochereau
75014 Paris (FR)**

(54) **SECONDARY BATTERY AND ELECTRIC APPARATUS**

(57)     A secondary battery, comprising a positive electrode material, the positive electrode material comprises lithium manganese iron phosphate, a chemical formula of the lithium manganese iron phosphate being $LiMn_aFe_bPO_4$, where $a + b = 1$, and $0.5 \leq a \leq 0.8$; and a discharge cutoff voltage value of the secondary battery is greater than or equal to 2.8 V, and the discharge cutoff voltage value of the secondary battery is less than or equal to 3.2 V.

FIG. 1

## Description

## TECHNICAL FIELD

This application relates to the field of electrochemical technologies, and in particular, to a secondary battery and an electric apparatus.

## BACKGROUND

The lithium manganese iron phosphate system has a higher energy density compared to the traditional lithium iron phosphate system. It has good application prospects in fields such as the electric motorcycle service in MEV (Mobility Electric Vehicle, mobility electric vehicle), electric city service in MEV, mobile power service in ESS (Energy Storage System, energy storage system), and base station power service in ESS.

## SUMMARY

The purpose of this application is to provide a secondary battery and an electric apparatus to improve the cycling performance and storage performance of the secondary battery.

A first aspect of this application provides a secondary battery, the secondary battery includes a positive electrode material, the positive electrode material includes lithium manganese iron phosphate, a chemical formula of the lithium manganese iron phosphate being $LiMn_aFe_bPO_4$, where $a + b = 1$, and $0.5 \leq a \leq 0.8$; a discharge cutoff voltage value of the secondary battery is greater than or equal to 2.8 V, and the discharge cutoff voltage value of the secondary battery is less than or equal to 3.2 V

In this application, through the selection of the lithium manganese iron phosphate positive electrode material within the above range, an energy density of the positive electrode material can be improved. Additionally, configuring the discharge cutoff voltage of the secondary battery to be greater than or equal to 2.8 V and less than or equal to 3.2 V allows the negative electrode potential to remain within a safe voltage range during the discharge process of the secondary battery. This improves the elevation of the negative electrode potential, thereby alleviating the decomposition of the solid electrolyte interphase (SEI) film and reducing gas generation in the secondary battery. Consequently, the cycling performance and storage performance of the secondary battery are enhanced.

In one or more of the foregoing optional embodiments, (1) the secondary battery is further configured to discharge based on a stepwise depth of discharge; or (2) the secondary battery is further configured to discharge based on a gradually changing depth of discharge.

In one or more of the foregoing optional embodiments, the secondary battery is configured to discharge based on a stepwise depth of discharge, the stepwise depth of discharge includes: (a) when a number of charge-discharge cycles of the secondary battery is within the C1 cycles, the depth of discharge $D_0$ of the secondary battery satisfies: $90\% \leq D_0 \leq 100\%$, $200 \leq C1 \leq 400$; and (b) when the number of charge-discharge cycles of the secondary battery is greater than C1 cycles, the depth of discharge D of the secondary battery satisfies: $D = D_0 - x$, where $1\% \leq x \leq 10\%$.

In one or more of the foregoing optional embodiments, x and a have a positive functional relationship, and/or, $D_0$ and N1 have a positive function relationship, N1 represents a number of charge-discharge cycles corresponding to the start of reducing the depth of discharge.

In one or more of the foregoing optional embodiments, the secondary battery is configured to discharge based on a gradually changing depth of discharge, the gradually changing depth of discharge includes: when a charge-discharge cycling life of the secondary battery is M cycles, and a charge-discharge cycling of the secondary battery includes N stages, a depth of discharge $D_i$ of the secondary battery in an i-th stage satisfies: $D_i = D_1 - (i-1)w$, where $D_1$ is the depth of discharge of the secondary battery in the first stage, $90\% \leq D_1 \leq 100\%$, i is a positive integer ranging from 1 to N, $0 < w \leq 2\%$, $D_N$ is the depth of discharge of the secondary battery in the Nth stage and $D_N \geq 70\%$.

In one or more of the foregoing optional embodiments, w and a satisfy the following relationships: (1) $0.6 \leq a \leq 0.8$, and $0 < w \leq 2\%$; or (2) $0.5 \leq a < 0.6$, and $0 < w \leq 1\%$.

In one or more of the foregoing optional embodiments, w satisfies: for the secondary battery in a second stage to an N-th stage, w is $w_2$, $w_3$, ..., wrr, respectively, where at least two among $w_2$, $w_3$, ..., wrr have different values.

In one or more of the foregoing optional embodiments, i, N, and w satisfy the following relationships: (1) $0 < i \leq N/3$, and $0 < w \leq 0.5\%$; (2) $N/3 < i \leq 2N/3$, and $0.5\% \leq w \leq 1\%$; and (3) $2N/3 < i \leq N$, and $0.5\% \leq w \leq 2\%$.

In one or more of the foregoing optional embodiments, N = M/A, where A is a number of charge-discharge cycles of the secondary battery in each stage, and N and M satisfy the following relationships: (1) when $0 < M \leq 1000$, $5 \leq N \leq 10$; (2) when $1000 < M \leq 2000$, $10 \leq N \leq 15$; (3) when $2000 < M \leq 3500$, $15 \leq N \leq 25$; and (4) when $M > 3500$, $25 \leq N \leq 50$.

In one or more of the foregoing optional embodiments, w and a have a positive functional relationship.

In one or more of the foregoing optional embodiments, (1) a discharge rate of the secondary battery is greater than or equal to 0.5C, and less than or equal to 5C; or (2) a discharge rate of the secondary battery is greater than or equal to 0.5C, and less than or equal to 3C.

In one or more of the foregoing optional embodiments, the positive electrode material further includes one or more of lithium iron phosphate $LiFePO_4$, lithium manganese oxide $LiMn_2O_4$, lithium cobalt oxide $LiCoO_2$, lithium nickel cobalt manganese oxide $LiNi_mCo_yMn_zO_2$, lithium nickel cobalt aluminum oxide $LiNi_nCo_kAl_jO_2$, or $LiNi_cMn_dO_2$, where $m + y + z = 1$, $n + k + j = 1$, and $c + d = 1$.

In one or more of the foregoing optional embodiments, based on a mass of the positive electrode material, a mass percentage of the lithium manganese iron phosphate in the positive electrode material is T, where $10\% \leq T \leq 90\%$. Optionally, $20\% \leq T \leq 80\%$.

A second aspect of this application provides an electric apparatus including the secondary battery provided in the first aspect of this application.

This application has the following beneficial effects.

A first aspect of this application provides a secondary battery and an electric apparatus, where the secondary battery includes a positive electrode material, the positive electrode material includes lithium manganese iron phosphate, a chemical formula of the lithium manganese iron phosphate being $LiMn_aFe_bPO_4$, where $a + b = 1$, and $0.5 \leq a \leq 0.8$; where a discharge cutoff voltage of the secondary battery is greater than or equal to 2.8 V, and the discharge cutoff voltage value of the secondary battery is less than or equal to 3.2 V. In this application, through the selection of the lithium manganese iron phosphate positive electrode material within the above range, an energy density of the positive electrode material can be improved. Additionally, configuring the discharge cutoff voltage of the secondary battery to be greater than or equal to 2.8 V and less than or equal to 3.2 V allows the negative electrode potential to remain within a safe voltage range during the discharge process. This improves the elevation of the negative electrode potential, thereby alleviating the decomposition of the SEI film and reducing gas generation in the secondary battery. Consequently, the cycling performance and storage performance of the secondary battery are enhanced.

## BRIEF DESCRIPTION OF DRAWINGS

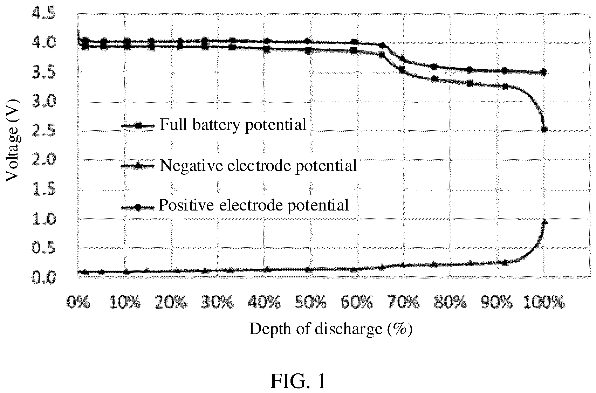

To describe the technical solutions in the embodiments of this application or in the prior art more clearly, the following briefly describes the accompanying drawings for describing the embodiments or the prior art. Apparently, the accompanying drawings in the following description show merely some embodiments of this application, and persons of ordinary skill in the art may still derive other embodiments from these accompanying drawings without creative efforts. FIG. 1 is a three-electrode potential diagram of discharge of a secondary battery according to an embodiment of this application.

## DESCRIPTION OF EMBODIMENTS

The following clearly describes in detail the technical solutions in some embodiments of this application with reference to the accompanying drawings in some embodiments of this application. Apparently, the described embodiments are only some rather than all embodiments of this application. All other embodiments obtained by persons skilled in the art based on this application shall fall within the protection scope of this application.

It should be noted that in specific embodiments of this application, an example in which a lithium-ion battery is used as a secondary battery is used to illustrate this application. However, the secondary battery in this application is not limited to the lithium-ion battery.

The inventor of this application has found through research that during the discharge process of a lithium manganese iron phosphate system secondary battery, when the voltage is in a high voltage state, a phase transition reaction occurs inside the secondary battery: $Mn^{2+}$ transforms into $Mn^{3+}$; and when the voltage is in a low voltage state, a phase transition reaction occurs inside the secondary battery: $Fe^{2+}$ transforms into $Fe^{3+}$. When Fe undergoes a phase transition reaction, negative electrode potential elevates. High negative electrode potential accelerates the decomposition of the SEI film, leading to gas generation in the secondary battery, which in turn affects the cycling performance and storage performance of the lithium manganese iron phosphate system secondary battery.

The lithium manganese iron phosphate system secondary battery in this application may either be a secondary battery where the positive electrode material only contains lithium manganese iron phosphate, or a secondary battery where the positive electrode material is a mixed system. The mixed system may include lithium manganese iron phosphate and another material, where the another material may include one or more of lithium iron phosphate $LiFePO_4$, lithium manganese oxide $LiMn_2O_4$, lithium cobalt oxide $LiCoO_2$, lithium nickel cobalt manganese oxide $LiNi_mCo_yMn_zO_2$, lithium nickel cobalt aluminum oxide $LiNi_nCo_kAl_jO_2$, or $LiNi_cMn_dO_2$.

In some embodiments of this application, optionally, the high voltage may be 3.9 V to 4.3 V, and the low voltage may be 2.8 V to 3.6 V.

The inventor of this application has also found through research that with the increase in the number of cycles of the lithium manganese iron phosphate system secondary battery, the dissolution of Mn in the positive electrode material intensifies. The dissolved Mn can migrate to a surface of the SEI film, catalyzing decomposition of the SEI film, which further leads to gas generation in the secondary battery. Therefore, the technical issue of gas generation caused by SEI film decomposition needs to be addressed or alleviated for the lithium manganese iron phosphate system secondary battery.

The inventor of this application has further found through research that during the discharge process of the lithium manganese iron phosphate system secondary battery, one reason for the SEI film decomposition and gas generation is the elevation in the negative electrode potential.

In some embodiments of this application, a method of reducing the voltage can be selected to lower the negative electrode potential during the cycling process of the lithium manganese iron phosphate system secondary battery, thereby suppressing gas generation caused by SEI film decomposition. Optionally, the method of reducing the voltage may be lowering the negative electrode potential.

In one or more embodiments, during the cycling process of the secondary battery, reducing the depth of discharge or increasing the discharge cutoff voltage may be selected. Full battery potential is equal to positive electrode potential minus negative electrode potential. When the depth of discharge gradually approaches 100% and the positive electrode potential remains unchanged, the full battery potential increases, thereby lowering the negative electrode potential. This can control the negative electrode potential (in the absence of polarization) within a safe range. As shown in FIG. 1, taking a secondary battery using $LiMn_{0.7}Fe_{0.3}PO_4$ as the positive electrode material as an example, when the discharge rate is relatively low, such as less than or equal to 0.05C, the effect of polarization can be ignored. When the full battery potential is 2.5 V, the corresponding negative electrode potential is 0.9 V When the full battery potential is 3.2 V, the corresponding negative electrode potential is 0.26 V, where the negative electrode potential (0.26 V) is within a safe voltage range of the negative electrode. However, during the actual cycling process of the secondary battery, polarization phenomenon occurs, leading to potential rebound. As shown in Table 1, at 25°C, when the discharge rate of the secondary battery is 0.5C, the actual full battery potential is 3.2 V, and the negative electrode potential is 0.26 V, the corresponding discharge cutoff voltage is 2.8 V Additionally, as an example, referring to FIG. 1, when the depth of discharge is between 90% and 100%, the negative electrode potential rises rapidly, and the slope of the rise is a positive function of the depth of discharge. The greater the depth of discharge, the larger the slope of the rise in the negative electrode potential, and the higher the negative electrode potential.

**Table 1**

| Discharge cutoff voltage (V) | 2.50 | 2.60 | 2.70 | 2.80 | 2.90 | 3.00 |
|---|---|---|---|---|---|---|
| Actual full battery potential (V) | 3.06 | 3.11 | 3.15 | 3.2 | 3.24 | 3.28 |

In one or more embodiments of this application, during the initial discharge process of the secondary battery, for example, when the number of charge-discharge cycles is within the first 200 to 400 cycles, the depth of discharge can be selected to be 100%, and the discharge cutoff voltage can be 2.8 V In the subsequent cycling process, the depth of discharge of the secondary battery can be controlled to be less than 100%, and the discharge cutoff voltage can be controlled to be greater than or equal to 2.8 V. As shown in Table 1, the greater the discharge cutoff voltage of the secondary battery, the greater the full battery potential, and the smaller the corresponding negative electrode potential. At this time, the negative electrode potential can be correspondingly controlled to be less than 0.26 V, placing the negative electrode potential within the safe voltage range.

In one or more embodiments of this application, controlling the discharge cutoff voltage of the secondary battery to be greater than or equal to 2.8 V and less than or equal to 3.2 V, that is, controlling the discharge cutoff voltage of the secondary battery to be between 2.8 V and 3.2 V, can control the negative electrode potential within the safe voltage range, alleviate the elevation of the negative electrode potential, thereby alleviating the decomposition of the SEI film, reducing gas generation in the secondary battery, and consequently improving the cycling performance and storage performance of the lithium manganese iron phosphate system secondary battery.

In this application, a general formula of lithium manganese iron phosphate can be $LiMn_aFe_bPO_4$, where $a + b = 1$, $0.5 \leq a \leq 0.8$, and an optional range for a is: $0.5 \leq a \leq 0.7$. For example, the value of a can be 0.5, 0.6, 0.7, 0.8, or a range defined by any two of the above values. During the discharge process of a lithium manganese iron phosphate system secondary battery, when the voltage is in a high voltage state, a phase transition reaction occurs inside the secondary battery: $Mn^{2+}$ transforms into $Mn^{3+}$; and when the voltage is in a low voltage state, a phase transition reaction occurs inside the battery: $Fe^{2+}$ transforms into $Fe^{3+}$. In the phase of transition from the Mn phase transition reaction to the Fe phase transition reaction, polarization phenomenon easily occurs, causing an increase in the polarization internal resistance of the secondary battery, a sudden drop in the positive electrode potential, and an elevation in the negative electrode potential. The depth of discharge corresponding to the position where the negative electrode potential elevates and the magnitude of the elevation are related to the manganese-iron ratio in lithium manganese iron phosphate and the value of a. The larger the value of a, the more severe the polarization phenomenon during the transition phase described above, the greater the elevation of the negative electrode potential, and the greater the depth of discharge corresponding to the position of the elevation. When the value of a is too large, such as greater than 0.8, a large elevation in the negative electrode potential accelerates the decomposition of the SEI film, which in turn is more likely to cause gas generation in the secondary battery. This is detrimental to improving the cycling performance and storage performance of the lithium manganese iron phosphate system secondary battery. When the value of a is too small, such as less than 0.5, the high voltage platform discharge region of the secondary battery shortens, affecting the energy density of the positive electrode material.

In some embodiments of this application, selecting the value of a within a range of this application, optionally, $0.5 \leq a \leq 0.8$, is beneficial to increasing the energy density of the positive electrode material, improving the elevation of the negative electrode potential, alleviating the decomposition of the SEI film, reducing gas generation in the secondary battery, and consequently improving the cycling performance and storage performance of the lithium manganese iron phosphate system secondary battery.

The method of controlling the secondary battery to stop discharging at the discharge cutoff voltage point is not particularly limited in this application, provided that objectives of this application can be achieved. In some embodiments of this application, the secondary battery can be controlled to stop discharging at the discharge cutoff voltage point through a BMS (Battery Management System, battery management system) in the secondary battery. For example, when the BMS detects that the voltage of the secondary battery is at the discharge cutoff voltage, it can control the charging switch and/or discharging switch to disconnect, thereby stopping the discharge of the secondary battery. It can be understood that after the secondary battery is manufactured, information about the secondary battery can be stored in the BMS storage medium. For example, the model, electrochemical system, manganese-iron ratio in lithium manganese iron phosphate, discharge cutoff voltage, depth of discharge, and the like of the secondary battery can be stored. Moreover, the above conditions can be preset in the BMS storage medium. In this way, after the BMS reads the information of the secondary battery, it can control the discharge operation of the secondary battery.

In some embodiments of this application, the secondary battery is further configured as follows: (1) the secondary battery discharges based on a stepwise depth of discharge; or (2) the secondary battery discharges based on a gradually changing depth of discharge. When the depth of discharge of the lithium manganese iron phosphate system secondary battery approaches 100%, the negative electrode potential elevates rapidly, and the height of the elevation is a positive function of the depth of discharge. The greater the depth of discharge, the higher the elevation in the negative electrode potential. Setting the depth of discharge of the secondary battery is beneficial to alleviating the elevation in the negative electrode potential, alleviating the decomposition of the SEI film, reducing gas generation in the secondary battery, and thus improving the cycling performance and storage performance of the lithium manganese iron phosphate system secondary battery.

In some embodiments of this application, the depth of discharge of the secondary battery can be controlled through the BMS (Battery Management System, battery management system) in the secondary battery. It can be understood that after the secondary battery is manufactured, information about the secondary battery can be stored in the BMS storage medium. For example, the model, electrochemical system, manganese-iron ratio in lithium manganese iron phosphate, depth of discharge, and the like of the secondary battery can be stored. Moreover, the above conditions can be preset in the BMS storage medium. In this way, after the BMS reads the information of the secondary battery, it can control the discharge operation of the secondary battery.

In some embodiments of this application, the secondary battery performs discharge operations based on a stepwise depth of discharge. The discharging based on a stepwise depth of discharge includes: (a) when the number of charge-discharge cycles of the secondary battery is within the first 200 to 400 cycles, the depth of discharge $D_0$ of the secondary battery satisfies: $90\% \leq D_0 \leq 100\%$; and (b) when the number of charge-discharge cycles of the secondary battery is greater than 200 to 400 cycles, the depth of discharge D of the secondary battery satisfies: $D = D_0 - x$, where $1\% \leq x \leq 10\%$.

For example, $D_0$ may be 90%, 92%, 94%, 96%, 98%, 100%, or any value in a range defined by any two of the above values. x may be 1%, 3%, 5%, 7%, 9%, 10%, or any value in a range defined by any two of the above values. In a process of discharging based on a stepwise depth of discharge, when the number of charge-discharge cycles of the secondary battery is within the first 200 to 400 cycles, the depth of discharge $D_0$ can be 90% to 100%, which can enable the lithium manganese iron phosphate system secondary battery to have good cycling performance and storage performance, increasing the usage efficiency of the secondary battery; when the number of charge-discharge cycles is greater than 200 to 400 cycles, the depth of discharge of the secondary battery is reduced, and the depth of discharge D of the secondary battery satisfies: $D = D_0 - x$, where $1\% \leq x \leq 10\%$, which can alleviate the elevation of the negative electrode potential, alleviate the decomposition of the SEI film, reduce gas generation in the secondary battery, and thereby improving the cycling performance and storage performance of the lithium manganese iron phosphate system secondary battery. In this application, in a process of discharging based on a stepwise depth of discharge, the number of charge-discharge cycles corresponding to the start of reducing the depth of discharge, that is, the selection of the above 200 to 400 cycles, may be determined according to the value of a in lithium manganese iron phosphate $LiMn_aFe_bPO_4$ or according to the discharge cutoff voltage. With all other conditions remaining unchanged, the smaller the value of a in lithium manganese iron phosphate $LiMn_aFe_bPO_4$, the larger the number of charge-discharge cycles corresponding to the start of reducing the depth of discharge can be selected. For example, when $0.5 \leq a < 0.6$, the number of cycles can be selected as 330 to 400; when $0.6 \leq a < 0.7$, the number of cycles can be selected as 270 to 330; and when $0.7 \leq a \leq 0.8$, the number of cycles can be selected as 200 to 270. With all other conditions remaining unchanged, the smaller the discharge cutoff voltage, the smaller the number of charge-discharge cycles corresponding to the start of reducing the depth of discharge can be selected. For example, when the discharge cutoff voltage is greater than or equal to 2.8 V and less than 3.0 V, the number of cycles can be 200 to 300; and when the discharge cutoff voltage is greater than or equal to 3.0 V and less than or equal to 3.2 V, the number of cycles can be 300 to 400.

In some embodiments of this application, in the process of discharging based on a stepwise depth of discharge, x may be a positive function of a, and x increases as a increases. For example, when $0.5 \leq a < 0.6$, x may be $1\% \leq x < 4\%$; when $0.6 \leq a < 0.7$, x may be $4\% \leq x < 7\%$; and when $0.7 \leq a \leq 0.8$, x may be $7\% \leq x \leq 10\%$.

In a process of discharging based on a stepwise depth of discharge, when a increases, if x remains constant, the elevation of the negative electrode potential increases. A significant elevation of the negative electrode potential accelerates the decomposition of the SEI film, leading to gas generation in the secondary battery, which is detrimental to improving the cycling performance and storage performance of the lithium manganese iron phosphate system secondary battery. When a remains constant and x increases, the depth of discharge during the cycling process decreases more, the depth of discharge is smaller, and the negative electrode potential is smaller, thereby alleviating the decomposition of the SEI film, reducing gas generation in the secondary battery, and consequently improving the cycling performance and storage performance of the lithium manganese iron phosphate system secondary battery. Therefore, setting x to increase as a increases allows the lithium manganese iron phosphate system secondary battery to have a larger depth of discharge during the cycling process, as well as having good cycling performance and storage performance.

In some embodiments of this application, the secondary battery performs discharge operations based on a gradually changing depth of discharge. The discharging based on a gradually changing depth of discharge includes: when a charge-discharge cycling life of the secondary battery is M cycles, and a charge-discharge cycling of the secondary battery includes N stages, the depth of discharge $D_i$ of the secondary battery in an i-th stage satisfies: $D_i = D_1 - (i-1)w$, where $D_1$ is the depth of discharge of the secondary battery in a first stage, $90\% \leq D_1 \leq 100\%$, i is a positive integer ranging from 1 to N, $0 < w \leq 2\%$, and $D_N \geq 70\%$. For example, in the first stage of the discharge process, the depth of discharge $D_1$ of the secondary battery may be set to 90%, 92%, 94%, 96%, 98%, 100%, or any value in a range defined by any two of the above values. For the secondary battery in a second stage to an N-th stage of the discharge process, w may be set to 0.1%, 0.5%, 0.8%, 1%, 1.5%, 2%, or any value in a range defined by any two of the above values.

In some embodiments of this application, in the process of discharging based on a gradually changing depth of discharge, w and a satisfy the following relationships: (1) $0.6 \leq a \leq 0.8$, and $0 < w \leq 2\%$; or (2) $0.5 \leq a < 0.6$, and $0 < w \leq 1\%$.

In some embodiments of this application, in the process of discharging based on a gradually changing depth of discharge, w satisfies the following relationships: for the secondary battery in a second stage to an N-th stage, w is $w_2$, $w_3$, ..., and wrr, respectively, where at least two among $w_2$, $w_3$, ..., wrr have different values.

In this application, when the secondary battery discharges based on a gradually changing depth of discharge, N = M/A, where A is the number of charge-discharge cycles of the secondary battery in each stage, and N and M satisfy the following relationships: (1) when $0 < M \leq 1000$, $5 \leq N \leq 10$; (2) when $1000 < M \leq 2000$, $10 \leq N \leq 15$; (3) when $2000 < M \leq 3500$, $15 \leq N \leq 25$; and (4) when $M > 3500$, $25 \leq N \leq 50$. N varies according to the value of M, enabling more precise control of the depth of discharge of the charge-discharge cycling in each stage.

In some embodiments of this application, the number of charge-discharge cycles of the secondary battery may be inversely related to the depth of discharge. With the increase in the number of charge-discharge cycles, the depth of discharge of the secondary battery is correspondingly reduced. Reducing the depth of discharge increases the discharge cutoff voltage, increases the full battery potential, and reduces the negative electrode potential, which helps to alleviate the elevation of the negative electrode potential, control the negative electrode potential to a lower level within a safe range, alleviate the decomposition of the SEI film, and reduce gas generation in the secondary battery, thereby improving the cycling performance and storage performance of the lithium manganese iron phosphate system secondary battery.

In some embodiments of this application, in the process of discharging based on a gradually changing depth of discharge, the value of w remains constant during the cycling process. In some embodiments of this application, in the process of discharging based on a gradually changing depth of discharge, the value of w changes during the cycling process as shown in Table 2. In an early stage of the cycling process (for example, $0 < i \leq N/3$), w can take a smaller value, such as $0 < w \leq 0.5\%$, resulting in less reduction in the depth of discharge, and a greater depth of discharge, which can improve the usage efficiency of the secondary battery and the capacity utilization rate of the secondary battery. As the cycling process progresses, the dissolution of Mn from the positive electrode material intensifies. The dissolved Mn migrates to the surface of the SEI film, catalyzing the decomposition of the SEI film, which further leads to gas generation in the secondary battery. In the mid-stage (for example, $N/3 < i \leq 2N/3$) and the later stage ($2N/3 < i \leq N$) of the cycling process, w can take a larger value, such as $0.5\% \leq w \leq 1\%$ in the mid-stage, and $0.5\% \leq w \leq 2\%$ in the later stage. This results in a greater reduction in the depth of discharge, and a smaller depth of discharge, which helps to alleviate the elevation of the negative electrode potential, control the negative electrode potential to a lower level within a safe range, alleviate the decomposition of the SEI film, reduce gas generation in the secondary battery, and consequently improve the cycling performance and storage performance of the lithium manganese iron phosphate system secondary battery.

**Table 2**

| M | N | w(0<i≤N/3) | w(N/3 <i≤2N/3) | w(2N/3<i≤N) |
|---|---|---|---|---|
| $0 < M \leq 1000$ | $5 \leq N \leq 10$ | $0 < w \leq 0.5\%$ | $0.5\% \leq w \leq 1\%$ | $0.5\% \leq w \leq 2\%$ |
| $1000 < M \leq 2000$ | $10 \leq N \leq 15$ | $0 < w \leq 0.5\%$ | $0.5\% \leq w \leq 1\%$ | $0.5\% \leq w \leq 2\%$ |
| $2000 < M \leq 3500$ | $15 \leq N \leq 25$ | $0 < w \leq 0.5\%$ | $0.5\% \leq w \leq 1\%$ | $0.5\% \leq w \leq 2\%$ |
| $3500 < M$ | $25 \leq N \leq 50$ | $0 < w \leq 0.5\%$ | $0.5\% \leq w \leq 1\%$ | $0.5\% \leq w \leq 2\%$ |

In some embodiments of this application, in the process of discharging based on a gradually changing depth of discharge, w is a positive function of a, and w increases as a increases. For example, when $0.5 \leq a < 0.6$, w may be $0 < w \leq 0.7\%$; when $0.6 \leq a < 0.7$, w may be $0.7\% < w \leq 1.4\%$; and when $0.7 \leq a \leq 0.8$, w may be $1.4\% < w \leq 2\%$. In a process of discharging based on a gradually changing depth of discharge, when a increases, if w remains constant, the elevation of the negative electrode potential increases. A significant elevation of the negative electrode potential accelerates the decomposition of the SEI film, leading to gas generation in the secondary battery, which is detrimental to improving the cycling performance and storage performance of the lithium manganese iron phosphate system secondary battery. When a remains constant and w increases, the depth of discharge during the cycling process decreases more, the depth of discharge is smaller, and the negative electrode potential is smaller, thereby alleviating the decomposition of the SEI film, reducing gas generation in the secondary battery, and consequently being beneficial to improving the cycling performance and storage performance of the lithium manganese iron phosphate system secondary battery. Therefore, setting w to increase as a increases allows the lithium manganese iron phosphate system secondary battery to have a larger depth of discharge during the cycling process, as well as having good cycling performance and storage performance.

In this application, a charge-discharge cycle may be a complete charge-discharge cycle, that is, the secondary battery uses 100% of its capacity and then is fully charged to 100% capacity again. The charge-discharge cycling life may be the number of charge-discharge cycles that the secondary battery can complete before its capacity retention rate decays to 70% at 25°C. The charge-discharge cycling life may be determined as follows: adjust the test temperature to a constant 25°C, charge the lithium-ion battery at a constant current of 0.5C to 4.2 V, then charge it at a constant voltage of 4.2 V to 0.05C, let the battery stand for 30 minutes, and then discharge it at a constant current of 0.5C to 2.8 V, with a depth of discharge of 100%. This is a charge-discharge cycle. Charge and discharge the lithium-ion battery according to the above method, record the discharge capacity of each cycle, until the discharge capacity of the lithium-ion battery decays to 70% of the discharge capacity of the first cycle, record the number of charge-discharge cycles at this time, and record it as the charge-discharge cycling life. When using the above method to determine the charge-discharge cycling life, the value of a in lithium manganese iron phosphate $LiMn_aFe_bPO_4$ may affect the charge-discharge cycling life. Specifically, the larger the value of a in lithium manganese iron phosphate $LiMn_aFe_bPO_4$, the more Mn is dissolved out, and the more severe the catalytic decomposition of the SEI film, which further leads to more severe gas generation in the secondary battery, reducing the charge-discharge cycling life of the secondary battery.

Typically, the charge-discharge cycling life of the secondary battery may also be obtained from the cell label, battery pack label, battery module label, packaging, user manual, instruction manual, advertisements, marketing materials, or other supporting documents.

In some embodiments of this application, the discharge rate of the secondary battery is greater than or equal to 0.5C and less than or equal to 5C. The discharge rate may affect the polarization voltage of the secondary battery during the discharge phase. The greater the discharge rate, the greater the elevation in the negative electrode potential in the transition region from Mn phase transition reaction to Fe phase transition reaction. In the region where the depth of discharge gradually approaches 100%, such as the region where the depth of discharge is 90% to 100%, the elevation is also greater. Setting the discharge rate of the secondary battery within the above range can reduce the elevation in the negative electrode potential in the transition region and the region where the depth of discharge gradually approaches 100%, alleviate the decomposition of the SEI film, and reduce gas generation in the secondary battery, thereby improving the cycling performance and storage performance of the lithium manganese iron phosphate system secondary battery.

In some embodiments of this application, the discharge rate of the secondary battery is greater than or equal to 0.5C and less than or equal to 3C.

In some embodiments of this application, the positive electrode material may further include one or more of lithium iron phosphate $LiFePO_4$, lithium manganese oxide $LiMn_2O_4$, lithium cobalt oxide $LiCoO_2$, lithium nickel cobalt manganese oxide $LiNi_mCo_yMn_zO_2$, lithium nickel cobalt aluminum oxide $LiNi_nCo_kAl_jO_2$, or $LiNi_cMn_dO_2$, where $m + y + z = 1$, $n + k + j = 1$, and $c + d = 1$. The above materials have good cycling performance, and the lithium manganese iron phosphate system secondary battery further includes the above range of positive electrode materials. This can exert the synergistic effect of various positive electrode materials, alleviating the serious problem of capacity decay in a single lithium manganese iron phosphate system secondary battery, thereby helping to enhance the cycling performance of the lithium manganese iron phosphate system secondary battery. Meanwhile, in the lithium manganese iron phosphate system, due to the phase transition reactions of $Mn^{2+}$ transitioning to $Mn^{3+}$ and $Fe^{2+}$ transitioning to $Fe^{3+}$, there is a voltage drop region on the full battery potential curve in the three-electrode potential diagram of discharge in the region of transition from the Mn phase transition reaction to the Fe phase transition reaction. This is unfavorable for the use of the secondary battery at a large depth of discharge. Adding the above materials can increase the voltage in the above transition region, which is beneficial for the use of the secondary battery at a large depth of discharge.

In some embodiments of this application, based on a mass of the positive electrode material in the secondary battery, a mass percentage of lithium manganese iron phosphate $LiMn_aFe_bPO_4$ in the positive electrode material is between 10% and 90%. Optionally, the mass percentage of lithium manganese iron phosphate $LiMn_aFe_bPO_4$ in the positive electrode material is between 20% and 80%.

A second aspect of this application provides an electric apparatus, including the secondary battery according to any of the foregoing embodiments. The secondary battery provided in the first aspect of this application has good cycling performance and storage performance. Therefore, the electric apparatus has good usage performance.

The electronic apparatus in this application is not particularly limited, and the electronic apparatus may be any known electric apparatus in the prior art. For example, the electric apparatus may include but is not limited to: an electric vehicle (an electric car, an electric motorcycle, an electric bicycle, and the like.), an electric tool (for example an electric drill, an electric saw, and the like), an electric cleaning tool (for example, a cleaning robot, a vacuum cleaner, and the like), and an energy storage system (a home energy storage apparatus, a commercial and industrial energy storage apparatus, a UPS energy storage apparatus, and the like).

## Example

The following describes the embodiments of this application more specifically by using examples and comparative examples. Various tests and evaluations are performed in the following methods. In addition, unless otherwise specified, "part" and "%" are based on weight.

## Test method and device

## Cycling performance test

The test temperature was adjusted to a constant 25°C, and the thickness of the prepared lithium-ion battery was measured, and recorded as the initial thickness of the lithium-ion battery at 25°C. The lithium-ion battery was charged at a constant current of 0.5C to 4.2 V, then charged at a constant voltage of 4.2 V to 0.05C, left for standing for 2 hours, and then discharged at a constant current according to the discharge method of the examples and the comparative examples of this application. This was a charge-discharge cycle, and the discharge capacity at this time was recorded as the first cycle discharge capacity. The lithium-ion battery was charged and discharged according to the above method for 1000 cycles (cycles, "cls"), and the discharge capacity at this time was recorded as the discharge capacity after cycling for 1000 cycles. The thickness of the lithium-ion battery after cycling for 1000 cls was measured, and recorded as the thickness after cycling for 1000 cls at 25°C.

The capacity retention rate after cycling for 1000 cls at 25°C and the swelling rate after cycling for 1000 cls at 25°C were calculated using the following formulas:

Capacity retention rate after cycling for 1000 cls at 25°C (%) = Discharge capacity after cycling for 1000 cycles/First cycle discharge capacity $\times$ 100%.

Swelling rate after cycling for 1000 cls at 25°C (%) = ((Thickness after cycling for 1000 cls at 25°C/Initial thickness of the lithium-ion battery at 25°C) - 1) $\times$ 100%.

The cycling performance was characterized by the capacity retention rate after cycling for 1000 cls at 25°C and the swelling rate after cycling for 1000 cls at 25°C. The larger the capacity retention rate after cycling for 1000 cls at 25°C and the smaller the swelling rate after cycling for 1000 cls at 25°C, the better the cycling performance.

**Test for storage performance**

The test temperature was adjusted to a constant 25°C. The prepared lithium-ion battery was charged at a constant current of 0.5C to 4.2 V, then charged at a constant voltage of 4.2 V to 0.05C, left for standing for 2 hours, and then discharged according to the discharge rate, depth of discharge, and discharge cutoff voltage of the examples and the comparative examples of this application. The thickness of the lithium-ion battery was measured, and recorded as the thickness of the lithium-ion battery before storage. Next, the lithium-ion battery was placed in a 60°C thermostat and stored for 120 days. After 120 days of storage, the lithium-ion battery was taken out, observed, and the thickness after storage was recorded as the thickness of the lithium-ion battery after storage at 60°C. The swelling rate after storage at 60°C was calculated using the following formula:

Swelling rate after storage at 60°C (%) = ((Thickness of the lithium-ion battery after storage at 60°C/Thickness of the lithium-ion battery before storage) - 1) $\times$ 100%.

The storage performance was characterized by the swelling rate after storage at 60°C. The smaller the swelling rate after storage at 60°C, the better the storage performance.

**Preparation Example 1**

<Preparation of positive electrode plate>

The positive electrode material lithium manganese iron phosphate ($LiMn_{0.7}Fe_{0.3}PO_4$), conductive carbon black (Super P), and polyvinylidene fluoride (PVDF, Mw = $7 \times 10^6$) were mixed at a mass ratio of 97.5:1.0:1.5, and N-methylpyrrolidone (NMP) was added as a solvent to prepare a slurry with a solid content of 70wt%, and the slurry was stirred to uniformity. The slurry was uniformly applied on one surface of the positive electrode current collector aluminum foil with a thickness of 13 $\mu$m, with a unit area mass of the positive electrode material in the positive electrode material layer being 20 mg/cm$^2$, then dried at 90°C to obtain a positive electrode plate coated with the positive electrode material layer on a single side. Then, the foregoing steps were repeated on another surface of the aluminum foil to obtain a positive electrode plate coated with the positive electrode material layer on two sides. Then, cold pressing, plate cutting, and slitting were performed. After slitting, it was dried under vacuum conditions at 85°C for 4 hours to obtain a positive electrode plate with specifications of 60 mm $\times$ 1580 mm, which was welded with tabs for later use. The compacted density of the positive electrode material layer was 3.2 g/cm$^3$.

<Preparation of negative electrode plate>

The negative electrode material graphite (Graphite), conductive carbon black (Super P), and styrene-butadiene rubber (SBR, Mw = $5 \times 10^6$) were mixed at a mass ratio of 96:1.5:2.5, and deionized water was added as a solvent to prepare a slurry with a solid content of 70wt%, which was stirred to uniformity. The slurry was uniformly applied on one surface of the negative electrode current collector copper foil with a thickness of 10 $\mu$m, with a unit area mass of the negative electrode material in the negative electrode material layer being 9.28 mg/cm$^2$, then dried at 110°C to obtain a negative electrode plate coated with the negative electrode material layer on a single side. Then the foregoing steps were repeated on another surface of the copper foil to obtain a negative electrode plate coated with the negative electrode material layer on two sides. Then, cold pressing, plate cutting, and slitting were performed. After slitting, it was dried under vacuum conditions at 110°C for 4 hours to obtain a negative electrode plate with specifications of 62 mm $\times$ 1600 mm, which was welded with tabs for later use. The compacted density of the negative electrode material layer was 1.71 g/cm$^3$.

<Preparation of electrolyte>

In a glove box with a dry argon atmosphere, first, organic solvent ethylene carbonate (EC), ethyl methyl carbonate (EMC), and diethyl carbonate (DEC) were mixed at a mass ratio of EC:EMC:DEC = 30:50:20, and then lithium hexafluorophosphate ($LiPF_6$) was added to the organic solvent for dissolving. The foregoing substances were mixed to uniformity to obtain an electrolyte with a lithium salt concentration of 1.15 mol/L.

<Preparation of separator>

A porous polyethylene film (provided by Celgard) with a thickness of 15 $\mu$m was used as the separator substrate. The ceramic particles alumina ($Al_2O_3$) and ceramic coating binder polyvinylidene fluoride (PVDF, Mw = 5 × $10^6$) were mixed at a mass ratio of 80:20, and N-methylpyrrolidone (NMP) was added, stirred to uniformity under the action of a vacuum stirrer to obtain a ceramic coating slurry with a solid content of 30wt%. Then the ceramic coating slurry was uniformly applied to one surface of the separator substrate to form a ceramic coating with a thickness of 2 $\mu$m. Then the polymer PVDF (Mw = 5 × $10^6$) was dissolved in deionized water to obtain a polymer coating slurry with a solid content of 40wt%. The polymer coating slurry was uniformly applied to the ceramic coating on one side and a surface of the separator substrate on another side, with a unit coating area of 2.5 mg/1540.25 mm$^2$ to obtain a separator with one side containing the ceramic coating and polymer coating, and another side containing the polymer coating.

<Preparation of lithium-ion battery>

The positive electrode plate, separator, and negative electrode plate were stacked in sequence so that the separator was sandwiched between the positive electrode plate and the negative electrode plate for separation, and wound to obtain an electrode assembly, where the side of the separator containing the ceramic coating and polymer coating was adjacent to the positive electrode plate, and the side containing the polymer coating was adjacent to the negative electrode plate. The electrode assembly was placed into an aluminum-plastic film housing, dried, and injected with the electrolyte. After processes such as vacuum packaging, standing, formation (charged at a constant current of 0.1C to 3.3 V, and then charged at a constant current of 0.3C to 4.1 V), capacity measurement, degassing, and trimming, a lithium-ion battery was obtained.

**Preparation Example 2**

The same as Preparation Example 1 except that in <Preparation of positive electrode plate>, the positive electrode material was $LiMn_{0.5}Fe_{0.5}PO_4$.

**Preparation Example 3**

The same as Preparation Example 1 except that in <Preparation of positive electrode plate>, the positive electrode material was $LiMn_{0.6}Fe_{0.4}PO_4$.

**Preparation Example 4**

The same as Preparation Example 1 except that in <Preparation of positive electrode plate>, the positive electrode material was $LiMn_{0.8}Fe_{0.2}PO_4$.

The test temperature was adjusted to a constant 45°C, and the thickness of the prepared lithium-ion battery was measured, and recorded as the initial thickness of the lithium-ion battery at 45°C. When the number of charge-discharge cycles was less than or equal to 300, the lithium-ion battery was charged at a constant current of 0.5C to 4.2 V, then charged at a constant voltage of 4.2 V to 0.05C, left for standing for 2 h, and then discharged at a constant current of 0.5C, with a discharge cutoff voltage of 2.8 V and a depth of discharge $D_0$ of 100%. When the number of charge-discharge cycles was greater than 300, the lithium-ion battery was charged at a constant current of 0.5C to 4.2 V, then charged at a constant voltage of 4.2 V to 0.05C, left for standing for 2 h, and then discharged at a constant current of 0.5C, with a discharge cutoff voltage of 2.8 V and a depth of discharge reduced by x% compared to $D_0$, where the value of x is shown in Table 3. The lithium-ion battery was charged and discharged according to the above method for 1000 cycles, and the thickness of the lithium-ion battery after cycling for 1000 cls was measured, and recorded as the thickness after cycling for 1000 cls at 45°C.

The swelling rate after cycling for 1000 cls at 45°C in Table 3 was calculated using the following formula:

Swelling rate after cycling for 1000 cls at 45°C (%) = ((Thickness after cycling for 1000 cls at 45°C/Initial thickness of the lithium-ion battery at 45°C) - 1) × 100%.

**Table 3**

| a | 0.5 | 0.6 | 0.7 | 0.8 |
|---|-----|-----|-----|-----|
| x | 1%  | 1%  | 1%  | 1%  |

(continued)

| Swelling rate after cycling for 1000 cls at 45°C | 3.7% | 5.1% | 7.2% | 9.3% |
|---|---|---|---|---|
| x | 3% | 3% | 3% | 3% |
| Swelling rate after cycling for 1000 cls at 45°C | 2.6% | 3.9% | 5.3% | 7.5% |
| x | 7% | 7% | 7% | 7% |
| Swelling rate after cycling for 1000 cls at 45°C | 2.1% | 3.05% | 4.2% | 6.1% |

As can be seen from Table 3, in a process of discharging based on a stepwise depth of discharge, when a increases, if x remains constant, the swelling rate after cycling for 1000 cls at 45°C gradually increases, which is detrimental to improving the cycling performance of the lithium manganese iron phosphate system secondary battery. When a remains constant and x increases, the swelling rate after cycling for 1000 cls at 45°C gradually decreases. In some embodiments of this application, x can be set as a positive function of a, and x increases as a increases. Thus, the lithium manganese iron phosphate system secondary battery can have a large depth of discharge during the charge-discharge cycling process, improving the usage efficiency and capacity utilization rate of the secondary battery, and also allowing the secondary battery to have small swelling rate, that is, have good cycling performance. Similar to the process of discharging based on a stepwise depth of discharge, in a process of discharging based on a gradually changing depth of discharge, the values of a and w also affect the cycling performance of the lithium manganese iron phosphate system secondary battery. Therefore, in some other embodiments of this application, w can be set as a positive function of a, and w increases as a increases. Thus, the lithium manganese iron phosphate system secondary battery can have a large depth of discharge during the charge-discharge cycling process, improving the usage efficiency and capacity utilization rate of the secondary battery, and also allowing the secondary battery to have good cycling performance.

In this application, based on the discharge cutoff voltage of the secondary battery being greater than or equal to 2.8 V and less than or equal to 3.2 V, the depth of discharge was further set to prepare the following examples and comparative examples.

**Example 1-1**

The test temperature was adjusted to a constant 25°C. The lithium-ion battery prepared in Preparation Example 1 was used, which had a charge-discharge cycling life of 2500 cycles, where the charge-discharge cycling included 20 stages, with 125 charge-discharge cycles in each stage. In the first stage, the lithium-ion battery was charged at a constant current of 0.5C to 4.2 V, then charged at a constant voltage of 4.2 V to 0.05C, left for standing for 2 h, and then discharged at a constant current of 0.5C, with a discharge cutoff voltage of 2.8 V and a depth of discharge $D_1$ of 100%. In the remaining stages, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 1% in each stage, that is, w = 1%. The cycling performance and storage performance of the secondary battery were tested.

**Example 1-2**

The same as Example 1-1 except that the discharge cutoff voltage during the discharge process was 3.0 V.

**Example 1-3**

The same as Example 1-1 except that the discharge cutoff voltage during the discharge process was 3.2 V.

**Example 1-4**

The same as Example 1-1 except that the lithium-ion battery prepared in Preparation Example 2 was used, which had a charge-discharge cycling life of 3500 cycles, where the charge-discharge cycling included 20 stages, with 175 charge-discharge cycles in each stage.

**Example 1-5**

The same as Example 1-1 except that the lithium-ion battery prepared in Preparation Example 3 was used, which had a charge-discharge cycling life of 3000 cycles, where the charge-discharge cycling included 20 stages, with 150 charge-discharge cycles in each stage.

### Example 1-6

The same as Example 1-1 except that the lithium-ion battery prepared in Preparation Example 4 was used, which had a charge-discharge cycling life of 2200 cycles, where the charge-discharge cycling included 20 stages, with 110 charge-discharge cycles in each stage.

### Example 1-7

The same as Example 1-5 except that in the remaining stages, the depth of discharge decreased by 0.6% in each stage, that is, w = 0.6%.

### Example 1-8

The same as Example 1-6 except that in the remaining stages, the depth of discharge decreased by 2% in each stage, that is, w = 2%.

### Example 1-9

The same as Example 1-1 except that the discharge was performed at a constant current of 3C during the discharge process.

### Example 1-10

The same as Example 1-1 except that the discharge was performed at a constant current of 5C during the discharge process.

### Example 1-11

The same as Example 1-1 except that the depth of discharge $D_1$ in the first stage was 95%.

### Example 1-12

The same as Example 1-1 except that the depth of discharge $D_1$ in the first stage was 90%.

### Example 1-13

The same as Example 1-1 except that the charge-discharge cycling included 15 stages, with 167 charge-discharge cycles in each stage from the first stage to the fourteenth stage, and 162 charge-discharge cycles in the fifteenth stage.

### Example 1-14

The same as Example 1-1 except that the charge-discharge cycling included 25 stages, with 100 charge-discharge cycles in each stage.

### Example 1-15

The test temperature was adjusted to a constant 25°C. The lithium-ion battery prepared in Preparation Example 1 was used, which had a charge-discharge cycling life of 2500 cycles. When the number of charge-discharge cycles was less than or equal to 300, the lithium-ion battery was charged at a constant current of 0.5C to 4.2 V, then charged at a constant voltage of 4.2 V to 0.05C, left for standing for 2 h, and then discharged at a constant current of 0.5C, with a discharge cutoff voltage of 2.8 V and a depth of discharge $D_0$ of 100%. When the number of charge-discharge cycles was greater than 300, the lithium-ion battery was charged at a constant current of 0.5C to 4.2 V, then charged at a constant voltage of 4.2 V to 0.05C, left for standing for 2 h, and then discharged at a constant current of 0.5C, with a discharge cutoff voltage of 2.8 V and a depth of discharge reduced by 5% compared to $D_0$, that is, x = 5%. The cycling performance and storage performance of the secondary battery were tested.

### Example 1-16

The same as Example 1-15 except that the lithium-ion battery prepared in Preparation Example 2 was used, which had a charge-discharge cycling life of 3500 cycles.

### Example 1-17

The same as Example 1-15 except that the lithium-ion battery prepared in Preparation Example 3 was used, which had a charge-discharge cycling life of 3000 cycles.

### Example 1-18

The same as Example 1-15 except that the lithium-ion battery prepared in Preparation Example 4 was used, which had a charge-discharge cycling life of 2200 cycles.

### Example 1-19

The same as Example 1-17 except that when the number of charge-discharge cycles was greater than 300, the depth of discharge was reduced by 2% compared to $D_0$, that is, x = 2%.

### Example 1-20

The same as Example 1-18 except that when the number of charge-discharge cycles was greater than 300, the depth of discharge was reduced by 10% compared to $D_0$, that is, x = 10%.

### Example 1-21

The same as Example 1-15 except that when the number of charge-discharge cycles was less than or equal to 300, the depth of discharge $D_0$ was 95%.

### Example 1-22

The same as Example 1-15 except that when the number of charge-discharge cycles was less than or equal to 300, the depth of discharge $D_0$ was 90%.

### Example 2-1

The test temperature was adjusted to a constant 25°C. The lithium-ion battery prepared in Preparation Example 2 was used, which had a charge-discharge cycling life of 3500 cycles, where the charge-discharge cycling included 20 stages, with 175 charge-discharge cycles in each stage. In the first stage, the lithium-ion battery was charged at a constant current of 0.5C to 4.2 V, then charged at a constant voltage of 4.2 V to 0.05C, left for standing for 2 h, and then discharged at a constant current of 0.5C, with a discharge cutoff voltage of 2.8 V and a depth of discharge $D_1$ of 100%. In the second stage to the sixth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 0.5% in each stage, that is, w = 0.5%. In the seventh stage to the thirteenth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 1% in each stage, that is, w = 1%. In the fourteenth stage to the twentieth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 1.5% in each stage, that is, w = 1.5%. The cycling performance and storage performance of the secondary battery were tested.

### Example 2-2

The test temperature was adjusted to a constant 25°C. The lithium-ion battery prepared in Preparation Example 3 was used, which had a charge-discharge cycling life of 3000 cycles, where the charge-discharge cycling included 20 stages, with 150 charge-discharge cycles in each stage. In the first stage, the lithium-ion battery was charged at a constant current of 0.5C to 4.2 V, then charged at a constant voltage of 4.2 V to 0.05C, left for standing for 2 h, and then discharged at a constant current of 0.5C, with a discharge cutoff voltage of 2.8 V and a depth of discharge $D_1$ of 100%. In the second stage to the sixth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 0.5% in each stage, that is, w = 0.5%. In the seventh stage to the thirteenth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 1% in each stage, that is, w = 1%. In the fourteenth stage to the twentieth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 1.5% in each stage, that is, w = 1.5%. The cycling performance and storage performance of the secondary battery were tested.

### Example 2-3

The test temperature was adjusted to a constant 25°C. The lithium-ion battery prepared in Preparation Example 1 was used, which had a charge-discharge cycling life of 2500 cycles, where the charge-discharge cycling included 20 stages, with 125 charge-discharge cycles in each stage. In the first stage, the lithium-ion battery was charged at a constant current of 0.5C to 4.2 V, then charged at a constant voltage of 4.2 V to 0.05C, left for standing for 2 h, and then discharged at a constant current of 0.5C, with a discharge cutoff voltage of 2.8 V and a depth of discharge $D_1$ of 100%. In the second stage to the sixth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 0.5% in each stage, that is, w = 0.5%. In the seventh stage to the thirteenth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 1% in each stage, that is, w = 1%. In the fourteenth stage to the twentieth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 1.5% in each stage, that is, w = 1.5%. The cycling performance and storage performance of the secondary battery were tested.

### Example 2-4

The test temperature was adjusted to a constant 25°C. The lithium-ion battery prepared in Preparation Example 4 was used, which had a charge-discharge cycling life of 2200 cycles, where the charge-discharge cycling included 20 stages, with 110 charge-discharge cycles in each stage. In the first stage, the lithium-ion battery was charged at a constant current of 0.5C to 4.2 V, then charged at a constant voltage of 4.2 V to 0.05C, left for standing for 2 h, and then discharged at a constant current of 0.5C, with a discharge cutoff voltage of 2.8 V and a depth of discharge $D_1$ of 100%. In the second stage to the sixth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 0.5% in each stage, that is, w = 0.5%. In the seventh stage to the thirteenth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 1% in each stage, that is, w = 1%. In the fourteenth stage to the twentieth stage, the lithium-ion battery was charged at a constant current of 0.5C to 4.2 V, then charged at a constant voltage of 4.2 V to 0.05C, left for standing for 2 hours, and then discharged at a constant current of 0.5C, with a discharge cutoff voltage of 2.8 V, and a depth of discharge decreased by 1.5% in each stage, that is, w = 1.5%. The cycling performance and storage performance of the secondary battery were tested.

### Comparative Example 1

The same as Example 1-1 except that the discharge cutoff voltage during the discharge process was 2.7 V.

### Comparative Example 2

The same as Example 1-1 except that the discharge cutoff voltage during the discharge process was 2.5 V.

**Comparative Example 3**

The same as Example 1-15 except that the discharge cutoff voltage during the discharge process was 2.7 V.

The parameters of each example and comparative example are shown in Table 4 and Table 5.

**Table 4**

| | Positive electrode material | a | Discharge cutoff voltage (V) | M (cls) | N | A (cls) | $D_1$ | w | $D_0$ | x | Discharge rate | Capacity retention rate after cycling for 1000 cls at 25°C | Swelling rate after cycling for 1000 cls at 25°C | Swelling rate after storage at 60°C |
|---|---|---|---|---|---|---|---|---|---|---|---|---|---|---|
| Example 1-1 | $LiMn_{0.7}Fe_{0.3}PO_4$ | 0.7 | 2.8 | 2500 | 20 | 125 | 100% | 1% | \ | \ | 0.5C | 91% | 3.1% | 8.1% |
| Example 1-2 | $LiMn_{0.7}Fe_{0.3}PO_4$ | 0.7 | 3.0 | 2500 | 20 | 125 | 100% | 1% | \ | \ | 0.5C | 93% | 2.8% | 7.5% |
| Example 1-3 | $LiMn_{0.7}Fe_{0.3}PO_4$ | 0.7 | 3.2 | 2500 | 20 | 125 | 100% | 1% | \ | \ | 0.5C | 93.8% | 2.6% | 7.4% |
| Example 1-4 | $LiMn_{0.5}Fe_{0.5}PO_4$ | 0.5 | 2.8 | 3500 | 20 | 175 | 100% | 1% | \ | \ | 0.5C | 94% | 2.1% | 6.7% |
| Example 1-5 | $LiMn_{0.6}Fe_{0.4}PO_4$ | 0.6 | 2.8 | 3000 | 20 | 150 | 100% | 1% | \ | \ | 0.5C | 93.2% | 2.5% | 7.2% |
| Example 1-6 | $LiMn_{0.8}Fe_{0.2}PO_4$ | 0.8 | 2.8 | 2200 | 20 | 110 | 100% | 1% | \ | \ | 0.5C | 89% | 4.7% | 8.7 % |
| Example 1-7 | $LiMn_{0.6}Fe_{0.4}PO_4$ | 0.6 | 2.8 | 3000 | 20 | 150 | 100% | 0.6% | \ | \ | 0.5C | 92.3% | 2.9% | 7.2% |
| Example 1-8 | $LiMn_{0.8}Fe_{0.2}PO_4$ | 0.8 | 2.8 | 2200 | 20 | 110 | 100% | 2% | \ | \ | 0.5C | 90% | 4.3% | 8.7 % |
| Example 1-9 | $LiMn_{0.7}Fe_{0.3}PO_4$ | 0.7 | 2.8 | 2500 | 20 | 125 | 100% | 1% | \ | \ | 3C | 87% | 5.2% | 9.6% |
| Example 1-10 | $LiMn_{0.7}Fe_{0.3}PO_4$ | 0.7 | 2.8 | 2500 | 20 | 125 | 100% | 1% | \ | \ | 5C | 84% | 6.8% | 9.8% |
| Example 1-11 | $LiMn_{0.7}Fe_{0.3}PO_4$ | 0.7 | 2.8 | 2500 | 20 | 125 | 95% | 1% | \ | \ | 0.5C | 89.1% | 2.3% | 7.2% |
| Example 1-12 | $LiMn_{0.7}Fe_{0.3}PO_4$ | 0.7 | 2.8 | 2500 | 20 | 125 | 90% | 1% | \ | \ | 0.5C | 90.2% | 2.7% | 7.8% |
| Example 1-13 | $LiMn_{0.7}Fe_{0.3}PO_4$ | 0.7 | 2.8 | 2500 | 15 | 167 | 100% | 1% | \ | \ | 0.5C | 90.1% | 3.4% | 8.1% |
| Example 1-14 | $LiMn_{0.7}Fe_{0.3}PO_4$ | 0.7 | 2.8 | 2500 | 25 | 100 | 100% | 1% | \ | \ | 0.5C | 91.5% | 2.9% | 8.1% |
| Example 1-15 | $LiMn_{0.7}Fe_{0.3}PO_4$ | 0.7 | 2.8 | 2500 | \ | \ | \ | \ | 100% | 5% | 0.5C | 90% | 2.9% | 7.9% |
| Example 1-16 | $LiMn_{0.5}Fe_{0.5}PO_4$ | 0.5 | 2.8 | 3500 | \ | \ | \ | \ | 100% | 5% | 0.5C | 92% | 2.6% | 7.4% |
| Example 1-17 | $LiMn_{0.6}Fe_{0.4}PO_4$ | 0.6 | 2.8 | 3000 | \ | \ | \ | \ | 100% | 5% | 0.5C | 91% | 2.7% | 7.6% |

| | Positive electrode material | a | Discharge cutoff voltage (V) | M (cls) | N | A (cls) | $D_1$ | w | $D_0$ | x | Discharge rate | Capacity retention rate after cycling for 1000 cls at 25°C | Swelling rate after cycling for 1000 cls at 25°C | Swelling rate after storage at 60°C |
|---|---|---|---|---|---|---|---|---|---|---|---|---|---|---|
| Example 1-18 | $LiMn_{0.8}Fe_{0.2}PO_4$ | 0.8 | 2.8 | 2200 | \ | \ | \ | \ | 100% | 5% | 0.5C | 89% | 3.9% | 8.1% |
| Example 1-19 | $LiMn_{0.6}Fe_{0.4}PO_4$ | 0.6 | 2.8 | 3000 | \ | \ | \ | \ | 100% | 2% | 0.5C | 89% | 2.9% | 7.6% |
| Example 1-20 | $LiMn_{0.8}Fe_{0.2}PO_4$ | 0.8 | 2.8 | 2200 | \ | \ | \ | \ | 100% | 10% | 0.5C | 87% | 2.5% | 8.1% |
| Example 1-21 | $LiMn_{0.7}Fe_{0.3}PO_4$ | 0.7 | 2.8 | 2500 | \ | \ | \ | \ | 95% | 5% | 0.5C | 85.6% | 2.2% | 6.3% |
| Example 1-22 | $LiMn_{0.7}Fe_{0.3}PO_4$ | 0.7 | 2.8 | 2500 | \ | \ | \ | \ | 90% | 5% | 0.5C | 87.5% | 2.5% | 7.6% |
| Comparative Example 1 | $LiMn_{0.7}Fe_{0.3}PO_4$ | 0.7 | 2.7 | 2500 | 20 | 125 | 100% | 1% | \ | \ | 0.5C | 89% | 4.5% | 9.2% |
| Comparative Example 2 | $LiMn_{0.7}Fe_{0.3}PO_4$ | 0.7 | 2.5 | 2500 | 20 | 125 | 100% | 1% | \ | \ | 0.5C | 87% | 5.8% | 9.8% |
| Comparative Example 3 | $LiMn_{0.7}Fe_{0.3}PO_4$ | 0.7 | 2.7 | 2500 | \ | \ | \ | \ | 100% | 5% | 0.5C | 86.6% | 4.2% | 8.1% |

Note: "\" in Table 4 indicates that there is no corresponding preparation parameter.

From Example 1-1 to Example 1-22 and Comparative Example 1 to Comparative Example 3, it can be seen that by using lithium manganese iron phosphate positive electrode material within the scope of this application, and by having a discharge cutoff voltage greater than or equal to 2.8 V and less than or equal to 3.2 V, the secondary battery in the embodiments of this application has a high capacity retention rate after cycling for 1000 cls at 25°C, and a low swelling rate after cycling for 1000 cls at 25°C and a low swelling rate after storage at 60°C, indicating that the lithium manganese iron phosphate system secondary battery has good cycling performance and storage performance.

The discharge cutoff voltage usually affects the cycling performance and storage performance of the lithium manganese iron phosphate system secondary battery. From Example 1-1 to Example 1-3, Example 1-15, and Comparative Example 1 to Comparative Example 3, it can be seen that when the discharge cutoff voltage is less than 2.8 V, such as in Comparative Example 1 to Comparative Example 3, the secondary battery has lower capacity retention rate after cycling for 1000 cycles at 25°C, and higher swelling rate after cycling for 1000 cycles at 25°C and higher swelling rate after storage at 60°C, indicating that the lithium manganese iron phosphate system secondary battery has poorer cycling performance and storage performance. When the discharge cutoff voltage is within the scope of this application, during the process of discharging based on a stepwise depth of discharge and the process of discharging based on a gradually changing depth of discharge, the secondary battery has a higher capacity retention rate after cycling for 1000 cls at 25°C, and a lower swelling rate after cycling for 1000 cls at 25°C and a lower swelling rate after storage at 60°C. This indicates that the lithium manganese iron phosphate system secondary battery has good cycling performance and storage performance.

The value of a in lithium manganese iron phosphate $LiMn_aFe_bPO_4$ usually affects the cycling performance and storage performance of a lithium manganese iron phosphate system secondary battery. From Example 1-1, Example 1-4 to Example 1-6, and Example 1-15 to Example 1-18, it can be seen that during a process of discharging based on a stepwise depth of discharge and a discharging process based on a gradually changing depth of discharge, as the value of a increases, the capacity retention rate of the secondary battery after cycling for 1000 cls at 25°C gradually decreases, and the swelling rate after cycling for 1000 cls at 25°C and the swelling rate after storage at 60°C gradually increase. The above lithium manganese iron phosphate system secondary batteries all had good cycling performance and storage performance.

The discharge rate usually may affect the cycling performance and storage performance of a lithium manganese iron phosphate system secondary battery. From Example 1-1 and Example 1-9 to Example 1-10, it can be seen that as the discharge rate increases, the capacity retention rate after cycling for 1000 cls at 25°C of the secondary battery gradually decreases, and the swelling rate after cycling for 1000 cls at 25°C and the swelling rate after storage at 60°C of the secondary batter gradually increase.

**Table 5**

| | Positive electrode material | a | Discharge cutoff voltage (V) | M (cls) | N | A (cls) | $D_1$ | w (0<i≤N/3) | w (N/3<i ≤2N/3) | w (2N/3< i≤N) | Discharge rate | Capacity retention rate after cycling for 1000 cls at 25°C | Swelling rate after cycling for 1000 cls at 25°C | Swelling rate after storage at 60°C |
|---|---|---|---|---|---|---|---|---|---|---|---|---|---|---|
| Example 2-1 | $LiMn_{0.5}Fe_{0.5}PO_4$ | 0.5 | 2.8 | 3500 | 20 | 175 | 100% | 0.5% | 1% | 1.5% | 0.5C | 93.2% | 2.4% | 6.7% |
| Examples 2-2 | $LiMn_{0.6}Fe_{0.4}PO_4$ | 0.6 | 2.8 | 3000 | 20 | 150 | 100% | 0.5% | 1% | 1.5% | 0.5C | 92% | 3.0% | 7.2% |
| Examples 2-3 | $LiMn_{0.7}Fe_{0.3}PO_4$ | 0.7 | 2.8 | 2500 | 20 | 125 | 100% | 0.5% | 1% | 1.5% | 0.5C | 90.2% | 3.3% | 8.1% |
| Examples 2 to 4 | $LiMn_{0.8}Fe_{0.2}PO_4$ | 0.8 | 2.8 | 2200 | 20 | 110 | 100% | 0.5% | 1% | 1.5% | 0.5C | 88.3% | 4.9% | 8.7% |

From Example 2-1 to Example 2-4, it can be seen that during a discharging process based on a gradually changing depth of discharge, w takes different values at different stages of the cycling process. Compared to Example 1-1, and Example 1-4 to Example 1-6, in which w takes the same value at different stages, it can be seen that in Example 2-1 to Example 2-4, in the early stages of the cycling process ($0 < i \leq N/3$), w takes smaller values, resulting in a greater depth of discharge, a decrease in the capacity retention rate after cycling for 1000 cls at 25°C of the secondary battery, and an increase in the swelling rate after cycling for 1000 cls at 25°C, but an improvement in the usage efficiency and capacity utilization rate of the secondary battery. The above lithium manganese iron phosphate system secondary batteries have good cycling performance and storage performance.

It should be noted that the terms "include", "comprise", or any other variations thereof are intended to cover a non-exclusive inclusion, so that a process, a method, or an item including a set of elements not only includes those elements but also includes other elements that are not expressly listed, or further includes elements inherent to such process, method, or item.

The embodiments in this specification are described in a related manner. For a part that is the same or similar between the embodiments, reference may be made between the embodiments. Each embodiment focuses on differences from other embodiments.

The foregoing descriptions are merely preferred embodiments of this application, and are not intended to limit this application. Any modifications, equivalent replacements, improvements, and the like made without departing from the spirit and principle of this application shall fall within the protection scope of this application.

**Claims**

1. A secondary battery, comprising a positive electrode material; the positive electrode material comprises lithium manganese iron phosphate, a chemical formula of the lithium manganese iron phosphate being $LiMn_aFe_bPO_4$, **characterized in that** $a + b = 1$, and $0.5 \leq a \leq 0.8$; and
   a discharge cutoff voltage value of the secondary battery is greater than or equal to 2.8 V, and the discharge cutoff voltage value of the secondary battery is less than or equal to 3.2 V.

2. The secondary battery according to claim 1, **characterized in that**

   (1) the secondary battery is configured to discharge based on a stepwise depth of discharge; or
   (2) the secondary battery is configured to discharge based on a gradually changing depth of discharge.

3. The secondary battery according to claim 2, **characterized in that** the secondary battery is configured to discharge based on a stepwise depth of discharge; the discharging based on the stepwise depth of discharge comprises:

   (a) when a number of charge-discharge cycles of the secondary battery is within C1 cycles, the depth of discharge $D_0$ of the secondary battery satisfies: $90\% \leq D_0 \leq 100\%$, $200 \leq C1 < 400$; and
   (b) when the number of charge-discharge cycles of the secondary battery is greater than C1 cycles, the depth of discharge D of the secondary battery satisfies: $D = D_0 - x$, wherein $1\% \leq x \leq 10\%$.

4. The secondary battery according to claim 3, **characterized in that** x and a have a positive functional relationship; And/or, $D_0$ and N1 have a positive function relationship, N1 represents a number of charge-discharge cycles corresponding to the start of reducing the depth of discharge.

5. The secondary battery according to claim 2, **characterized in that** the secondary battery is configured to discharge based on a gradually changing depth of discharge; the discharging based on the gradually changing depth of discharge comprises:

   when a charge-discharge cycling life of the secondary battery is M cycles, and a charge-discharge cycling of the secondary battery comprises N stages, a depth of discharge $D_i$ of the secondary battery in an i-th stage satisfies: $D_i = D_1 - (i-1)w$,
   wherein $D_1$ is the depth of discharge of the secondary battery in the first stage, $90\% \leq D_1 \leq 100\%$, i is a positive integer ranging from 1 to N, $0 < w \leq 2\%$, $D_N$ is the depth of discharge of the secondary battery in the Nth stage and $D_N \geq 70\%$.

6. The secondary battery according to claim 5, **characterized in that** w and a have a positive functional relationship.

7. The secondary battery according to claim 5 or 6, **characterized in that** w and a satisfy the following relationships:

$$(1)\ 0.6 \leq a \leq 0.8,\ \text{and}\ 0 < w \leq 2\%;$$

or

$$(2)\ 0.5 \leq a < 0.6,\ \text{and}\ 0 < w \leq 1\%.$$

8. The secondary battery according to any one of claims 5 to 7, **characterized in that** w satisfies: for the secondary battery in a second stage to an N-th stage, w is $w_2$, $w_3$, ..., and wrr, respectively, wherein at least two among $w_2$, $w_3$, ..., wrr have different values.

9. The secondary battery according to any one of claims 5 to 8, **characterized in that** i, N, and w satisfy the following relationships:

$$(1)\ 0 < i \leq N/3,\ \text{and}\ 0 < w \leq 0.5\%;$$

$$(2)\ N/3 < i \leq 2N/3,\ \text{and}\ 0.5\% \leq w \leq 1\%;$$

and

$$(3)\ 2N/3 < i \leq N,\ \text{and}\ 0.5\% \leq w \leq 2\%.$$

10. The secondary battery according to any one of claims 5 to 9, **characterized in that** N = M/A, wherein A is a number of charge-discharge cycles of the secondary battery in each stage, and N and M satisfy the following relationships:

$$(1)\ \text{when}\ 0 < M \leq 1000,\ 5 \leq N \leq 10;$$

$$(2)\ \text{when}\ 1000 < M \leq 2000,\ 10 \leq N \leq 15;$$

$$(3)\ \text{when}\ 2000 < M \leq 3500,\ 15 \leq N \leq 25;$$

and

$$(4)\ \text{when}\ M > 3500,\ 25 \leq N \leq 50.$$

11. The secondary battery according to any one of claims 1 to 10, **characterized in that**

(1) a discharge rate of the secondary battery is greater than or equal to 0.5C, and less than or equal to 5C; or
(2) a discharge rate of the secondary battery is greater than or equal to 0.5C, and less than or equal to 3C.

12. The secondary battery according to any one of claims 1 to 11, **characterized in that** the positive electrode material further comprises one or more of lithium iron phosphate $LiFePO_4$, lithium manganese oxide $LiMn_2O_4$, lithium cobalt oxide $LiCoO_2$, lithium nickel cobalt manganese oxide $LiNi_mCo_yMn_zO_2$, lithium nickel cobalt aluminum oxide $LiNi_nCo_kAl_jO_2$, or $LiNi_cMn_dO_2$, wherein m + y + z = 1, n + k + j = 1, and c + d = 1.

13. The secondary battery according to claim 12, **characterized in that** based on a mass of the positive electrode material, a mass percentage of the lithium manganese iron phosphate in the positive electrode material is T, wherein $10\% \leq T \leq 90\%$.

14. The secondary battery according to claim 13, **characterized in that** $20\% \leq T \leq 80\%$.

15. An electric apparatus, wherein the electric apparatus comprises the secondary battery according to any one of claims 1 to 14.

FIG. 1

Europäisches
Patentamt

European
Patent Office

Office européen
des brevets

# EUROPEAN SEARCH REPORT

**Application Number**

EP 24 22 3326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/402583 A1 (BUCHHOLZ DANIEL [DE] ET AL) 14 December 2023 (2023-12-14) * paragraph [0029] - paragraph [0031]; claims 11, 16; figure 2 * ----- | 1-15 | INV. H01M4/131 H01M4/136 H01M4/36 H01M4/505 H01M4/525 H01M4/58 |
| X | WO 2023/179788 A1 (EVE POWER CO LTD [CN]) 28 September 2023 (2023-09-28) * see passages cited in the US family member * & US 2025/015265 A1 (LI YONGJUN [CN] ET AL) 9 January 2025 (2025-01-09) * paragraph [0037] - paragraph [0039] * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 10 June 2025 | Dunn, Halina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 22 3326

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | | Publication date |
|---|---|---|---|---|
| US 2023402583 A1 | 14-12-2023 | CN | 116420250 A | 11-07-2023 |
| | | DE | 102020130687 A1 | 25-05-2022 |
| | | EP | 4248504 A1 | 27-09-2023 |
| | | JP | 2023551438 A | 08-12-2023 |
| | | KR | 20230073277 A | 25-05-2023 |
| | | US | 2023402583 A1 | 14-12-2023 |
| | | WO | 2022106221 A1 | 27-05-2022 |
| WO 2023179788 A1 | 28-09-2023 | CN | 114665076 A | 24-06-2022 |
| | | EP | 4485569 A1 | 01-01-2025 |
| | | US | 2025015265 A1 | 09-01-2025 |
| | | WO | 2023179788 A1 | 28-09-2023 |

EPO FORM P0459

For more details about this annex : see Official Journal of the European Patent Office, No. 12/82